# EUROPÄISCHE PATENTSCHRIFT

(11) **EP 1 627 767 B1**
(45) Veröffentlichungstag und Bekanntmachung des Hinweises auf die Patenterteilung: **26.11.2008**
(21) Anmeldenummer: 05016450.8
(22) Anmeldetag: 28.07.2005
(51) Int. Cl.: B60L 11/18

(54) **Flurförderzeug, insbesondere Gegengewichtsstapler, mit einem elektrischen Antriebssystem**
Industrial truck, in particular a forklift, with an electric drive
Chariot de manutention, en particulier chariot élévateur à fourche, à entraînement électrique

(30) Priorität: 20.08.2004 DE 102004040499
(43) Veröffentlichungstag der Anmeldung: 22.02.2006
(73) Patentinhaber: STILL GMBH, 22113 Hamburg (DE)
(72) Erfinder: Bavendiek, Rainer, Dr., 21465 Wentorf (DE); Stall, Eugen, Dr., 53819 Neunkirchen (DE)
(74) Vertreter: Geirhos, Johann

(56) Entgegenhaltungen:
- DE-A1- 10 003 271
- DE-A1- 19 956 623
- FR-A- 2 685 547
- GB-A- 2 374 844
- US-A- 4 593 779
- PATENT ABSTRACTS OF JAPAN Bd. 2003, Nr. 01, 14. Januar 2003 (2003-01-14) -& JP 2002 265191 A (TOYOTA INDUSTRIES CORP), 18. September 2002 (2002-09-18)

## Beschreibung

Die Erfindung betrifft Flurförderzeug, insbesondere Gegengewichtsgabelstapler, mit einem elektrischen Antriebssystem, wobei das Flurförderzeug einen einzigen sich über die gesamte Fahrzeugbreite erstreckenden Aufnahmeraum mit einer einzigen in einem seitlichen Rahmenabschnitt ausgebildeten seitlichen Entnahmeöffnung für eine elektrische Energieversorgungseinrichtung aufweist.

Flurförderzeuge mit einem elektrischen Antriebssystem weisen in der Regel eine als Traktionsbatterie ausgebildete Energieversorgungseinrichtung auf. Mit einem derartigen Antriebssystem ist ein emissionsfreier Betrieb des Flurförderzeugs innerhalb geschlossener Gebäude möglich. Die Betriebsdauer derartiger Flurförderzeuge ist jedoch durch die Traktionsbatterie begrenzt. Da Traktionsbatterie lange Nachladezeiten aufweisen, werden um einen Betrieb des Flurförderzeugs über mehrere Schichten zu ermöglichen, mehrere Traktionsbatterien vorgesehen. Die entladene Traktionsbatterie wird hierbei aus dem Flurförderzeug entnommen und gegen eine aufgeladene Traktionsbatterie ausgetauscht. Das Vorsehen mehrerer Traktionsbatterien in Verbindung mit dem Wechsel der Traktionsbatterien führt jedoch zu einem hohen Betriebsaufwand.

Ein gattungsgemäßes Flurförderzeug ist aus der JP 2002 265191 bekannt. Das Flurförderzeug weist einen einzigen, sich über die gesamte Fahrzeugbreite erstreckenden Aufnahmeraum für eine als Batterie ausgebildete elektrische Energieversorgungseinrichtung auf, wobei der Aufnahmeraum eine einzige in einem seitlichen Rahmenabschnitt ausgebildete seitliche Entnahmeöffnung aufweist.

Um bei einem Flurförderzeug mit einem elektrischen Antriebssystem, das im gemischten Betrieb innerhalb und außerhalb geschlossener Gebäude eingesetzt wird, ein längere Betriebsdauer zu erzielen, ist bereits bekannt, eine Hybridantriebseinrichtung zu verwenden, das anstelle der Traktionsbatterie in dem Aufnahmeraum des Flurförderzeugs angeordnet werden kann. Aus der DE 43 21 768 A1 ist ein Flurförderzeug mit einem elektrischen Antriebssystem bekannt, bei dem in den Aufnahmeraum anstelle der Traktionsbatterie eine Hybridantriebseinrichtung mit einem von einem Verbrennungsmotor angetriebenen Generator und einer Batterie eingebaut werden kann. Bei diesem Flurförderzeug wird der Aufnahmeraum nach oben durch eine Klappe geöffnet. Der Aufnahmeraum ist seitlich geschlossen, wodurch für den Lufteinlass und den Luftauslass sowie für die Abgasanlage des Verbrennungsmotors der Hybridantriebseinrichtung erhebliche Änderungen am Flurförderzeug erforderlich sind, die zu einem hohen Bauaufwand für den Hybridantrieb führen.

Aus der DE 100 03 271 A1 ist ein als Gabelstapler ausgebildetes Flurförderzeug mit einem elektrischen Antriebssystem bekannt. Der Gabelstapler weist beidseits der Längsachse jeweils einen Aufnahmeraum auf, wobei jeder Aufnahmeraum jeweils zur Seite hin offen ist. In den beiden Aufnahmeräumen kann jeweils eine Batterie angeordnet werden. Zudem ist es möglich, in einem Aufnahmeraum anstelle einer Batterie ein Stromerzeugermodul für einen Hybridantrieb anzuordnen. Das Stromerzeugermodul umfasst einen Verbrennungsmotor und einen Generator.

Aus der US 4 593 779 ist ein als Schlepper ausgebildetes Flurförderzeug mit einem sich über die gesamte Fahrzeugbreite erstreckenden Aufnahmeraum für eine Batterie bekannt. Zusätzlich kann zum Erzeugen eines Hybridantriebs auf einer Plattform des Schleppers eine Stromerzeugungseinrichtung angeordnet werden, die einen Verbrennungsmotor und zwei von dem Verbrennungsmotor angetriebene Generatoren umfasst, wobei ein Generator zum Laden der Batterie vorgesehen ist.

Der vorliegenden Erfindung liegt die Aufgabe zugrunde, ein Flurförderzeug der eingangs genannten Art zur Verfügung zustellen, das auf einfache und kostengünstige Weise mit einem Hybridantrieb versehen werden kann.

Diese Aufgabe wird erfindungsgemäß dadurch gelöst, dass die Energieversorgungseinrichtung als eine autarke Baueinheit ausgebildet ist, die eine Hybridantriebseinrichtung mit einer Batterie und einer Stromerzeugungseinrichtung umfasst, wobei die Baueinheit durch einen seitlichen Wechsel über die seitliche Entnahmeöffnung in den Aufnahmeraum des Flurförderzeugs einbaubar bzw. aus dem Aufnahmeraum des Flurförderzeugs ausbaubar ist.

Erfindungsgemäß wird somit bei einem Flurförderzeug mit seitlicher Entnahmeöffnung eine als autarke Baueinheit ausgebildete Hydridantriebseinrichtung vorgesehen, die anstelle einer Traktionsbatterie in den Aufnahmeraum eingesetzt werden kann. Durch den über die Entnahmeöffnung seitlich offenen Aufnahmeraum ist es auf einfache Weise und mit geringem Bauaufwand möglich, die autarke Baueinheit der Hybridantriebseinrichtung gegen eine Traktionsbatterie auszutauschen, wobei für den Lufteinlass bzw. Luftauslass sowie die Abgasanlage der Hybridantriebseinrichtung keine umfangreichen Veränderungen am Flurförderzeug erforderlich sind.

Gemäß einer bevorzugten Ausgestaltungsform der Erfindung umfasst die Stromerzeugungseinrichtung einen von einem Verbrennungsmotor angetriebenen elektrischen Generator. Mit einem Verbrennungsmotor kann auf einfache Weise eine Hybridantriebseinrichtung für ein Flurförderzeug mit elektrischem Antriebssystem gebildet werden.

Zudem ist es möglich, die Stromerzeugungseinrichtung als Brennstoffzelle auszubilden, wodurch sich weitere Vorteile ergeben, da eine Brennstoffzelle aufgrund eines emissionsfreien Betriebs innerhalb geschlossener Gebäude betrieben werden kann.

Zweckmäßigerweise ist die Baueinheit mit einer Kühlereinrichtung versehen. Hierdurch kann auf einfache Weise eine Kühlung der Stromerzeugungseinrichtung sichergestellt werden.

Gemäß einer bevorzugten Ausgestaltungsform der Erfindung ist die Baueinheit mit einem Lufteinlass und/oder einem Luftauslass versehen, wobei der Lufteinlass und/oder der Luftauslass im Bereich des Bodens des Aufnahmeraums und/oder im Bereich der seitlichen Entnahmeöffnung des Aufnahmeraums angeordnet ist. Flurförderzeuge mit einem seitlich offenen Aufnahmeraum weisen in der Regel am Boden des Aufnahmeraums einen zumindest teilweise offenen Rahmen auf. Durch die Anordnung des Lufteinlasses und des Luftauslasses im Bereich des Bodens des Aufnahmeraumes und somit des teilweisen offenen Rahmens oder im Bereich der seitlichen Entnahmeöffnung können bereits vorhandene Öffnungen zur Luftführung des Verbrennungsmotors bzw. der Brennstoffzelle und der Kühlereinrichtung verwendet werden, wodurch keine Veränderung am Flurförderzeug für die Hybridantriebseinrichtung erforderlich sind.

In Weiterbildung der Erfindung ist vorgesehen, dass die Baueinheit mit einer Abgasanlage versehen ist, wobei der Auslass der Abgasanlage im Bereich des Bodens des Aufnahmeraums und/oder im Bereich der seitlichen Entnahmeöffnung des Aufnahmeraums angeordnet ist. Der Auslass der Abgasanlage kann somit ebenfalls ohne zusätzliche Veränderungen am Flurförderzeug zu erfordern im Bereich der bereits vorhandenen Entnahmeöffnung oder des teilweise offenen Rahmens am Boden des Aufnahmeraumes angeordnet werden.

Gemäß einer bevorzugten Weiterbildung der Erfindung weist die autarke Baueinheit einen Brennstoffspeicher auf. Als Brennstoffspeicher kann beispielsweise ein Kraftstoffbehälter oder ein Gasbehälter für einen Verbrennungsmotor oder ein Druckbehälter, insbesondere für Wasserstoff, für eine Brennstoffzelle vorgesehen werden.

Sofem der Brennstoffspeicher mit einer Befüllvorrichtung versehen ist, ergeben sich besondere Vorteile, wenn die Befüllvorrichtung im Bereich der seitlichen Entnahmeöffnung des Aufnahmeraums angeordnet ist. Die Befülleinrichtung kann hierbei auf einfache Weise zur Betankung des Brennstoffspeichers von Außen zugänglich im Bereich der Entnahmeöffnung des Aufnahmeraumes angeordnet werden.

Zweckmäßigerweise weist die Baueinheit eine Energiekontakteinrichtung auf, mittels der die Batterie der Hybridantriebseinrichtung an das fahrzeugseitige elektrische Antriebssystem anschließbar ist. Hierdurch kann die Hybridantriebeinrichtung auf einfache Weise als Ersatz und Alternative der Traktionsbatterie als Energieversorgungseinrichtung für das elektrische Antriebssystem des Flurförderzeugs verwendet werden.

Besondere Vorteile ergeben sich, wenn die Baueinheit eine Steuer- und Regelungseinheit umfasst. Durch eine in der Baueinheit integrierte Steuer- und Regeleinrichtung kann der Betrieb der Hybridantriebseinrichtung auf einfache Weise gesteuert werden, um beispielsweise einen manuellen oder automatischen Betrieb des Verbrennungsmotors in Abhängigkeit von dem Ladezustand der Batterie oder in Abhängigkeit von der Fahrzeugposition innerhalb oder außerhalb geschlossener Gebäude zu ermöglichen. Zudem ist es durch eine derartige Steuer- und Regeleinrichtung möglich, beim Betrieb des Verbrennungsmotors zum Laden der Batterie einen quasi stationären Betriebszustand vorzusehen, um den Verbrennungsmotor im wirkungsgradoptimalen Betriebspunkt zu betreiben.

Mit besonderem Vorteil weist die Baueinheit hierzu eine Datenkontakteinrichtung auf, mittels der die Steuer- und Regeleinrichtung an fahrzeugseitige Bedienelemente und/oder eine fahrzeugseitige Steuer- und Regeleinrichtung anschließbar ist. Hierdurch kann auf einfache Weise durch Betätigen eines Bedienelements der Verbrennungsmotor in Abhängigkeit von der Fahrzeugposition außerhalb oder innerhalb geschlossener Gebäude ein- bzw. ausgeschalten werden und eine Kommunikation der Hybridantriebseinrichtung mit dem Flurförderzeug erzielt werden.

Weitere Vorteile und Einzelheiten der Erfindung werden anhand des in den schematischen Figuren dargestellten Ausführungsbeispiels näher erläutert. Hierbei zeigt
- Figur 1: einen Gabelstapler mit einer in seitlicher Richtung entnehmbaren Energieversorgungseinrichtung,
- Figur 2: den Gabelstapler in einer Draufsicht und
- Figur 3: eine erfindungsgemäße Energieversorgungseinrichtung in einer Draufsicht.

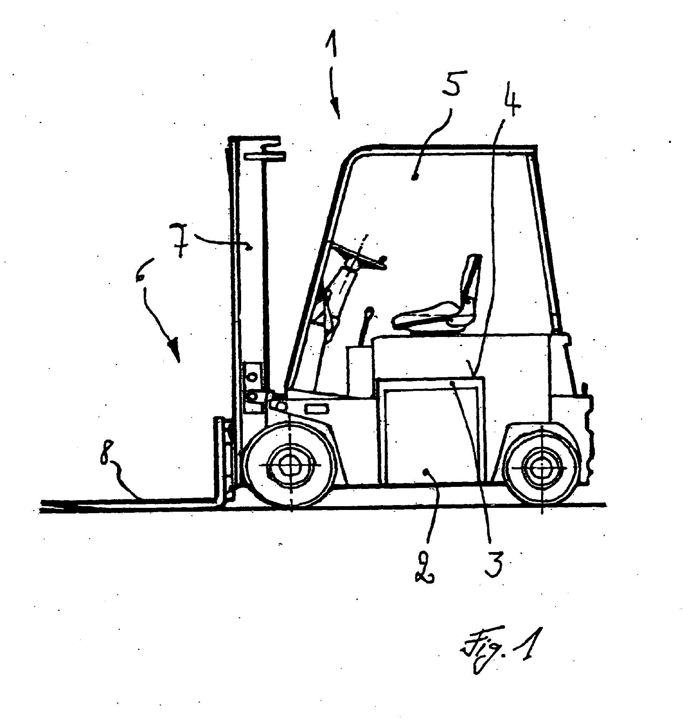

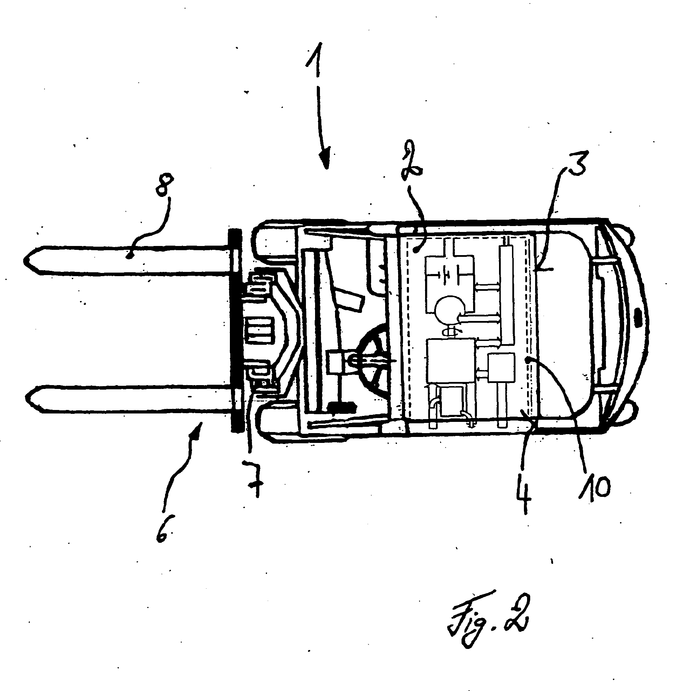

Die Figuren 1 und 2 zeigen ein als Gegengewichtsgabelstapler ausgebildetes Flurförderzeug 1 mit einem elektrischen Antriebssystem. Das elektrische Antriebssystem umfasst zumindest einen nicht mehr dargestellten elektrischen Fahrantrieb zum Antrieb des Gabelstaplers und einen ebenfalls nicht mehr dargestellten elektrischen Motor zum Antrieb einer Hydraulikanlage, die zur Versorgung einer Arbeitshydraulik vorgesehen ist. Zur Versorgung des elektrischen Antriebssystems mit Energie ist eine elektrische Energieversorgungseinrichtung 2 vorgesehen. Die Energieversorgungseinrichtung 2 ist in einem Aufnahmeraum 3 des Gabelstaplers angeordnet. Der Aufnahmeraum 3 ist mit einer seitlichen Entnahmeöffnung 4 versehen, die im seitlichen Rahmenabschnitt des Gabelstaplers ausgebildet ist. Im Wesentlichen oberhalb der Energieversorgungseinrichtung 2 befindet sich ein Fahrerplatz 5 des Gabelstaplers. Eine Lasthandhabungsvorrichtung 6 mit einem Hubgerüst 7 und einer Lastgabel 8 ist vorne am Gabelstapler angeordnet. Die Energieversorgungseinrichtung 2 kann in horizontaler Richtung seitlich über die Entnahmeöffnung 4 aus dem Gabelstapler entnommen werden. Die im seitlichen Rahmenabschnitt des Gabelstaplers ausgebildete Entnahmeöffnung 4 ist hierbei mittels einer nicht mehr dargestellten Tür verschließbar.

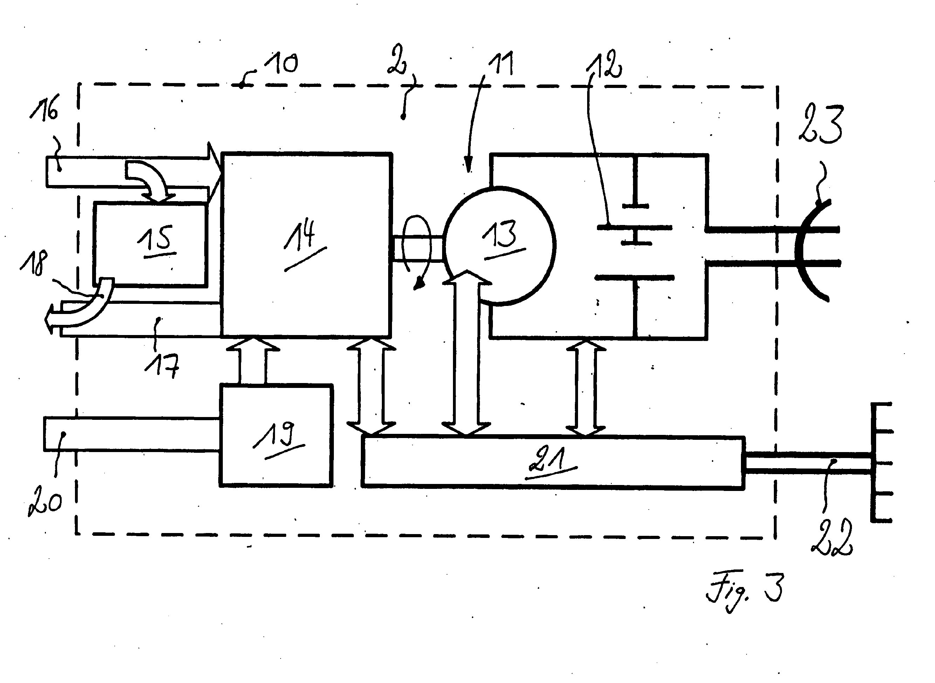

In der Figur 3 ist die Draufsicht auf eine als Hybridantriebseinrichtung ausgebildete Energieversorgungseinrichtung 2 gezeigt, die erfindungsgemäß als autarke Baueinheit 10 ausgebildet ist.

Die Hybridantriebseinrichtung umfasst eine Stromerzeugungseinrichtung 11, die mit einer als Pufferbatterie ausgebildeten Batterie 12 in Wirkverbindung steht. Die Stromerzeugungseinrichtung 11 weist einen elektrischen Generator 13 auf, der mit einem Verbrennungsmotor 14 in Wirkverbindung steht. Als Stromerzeugungseinrichtung 11 kann ebenfalls eine Brennstoffzelle vorgesehen werden, die mit der als Pufferbatterie ausgebildeten Batterie 12 in Verbindung steht. Die Baueinheit 10 ist weiterhin mit einer Kühlereinrichtung 15 versehen. Der Lufteinlass 16 für die Kühlereinrichtung 15 und den Verbrennungsmotor 14 ist hierbei an der Seite der Baueinheit 10 angeordnet, so dass der Lufteinlass 16 im eingebauten Zustand der Baueinheit 10 in dem Aufnahmeraum 3 im Bereich der seitlichen Entnahmeöffnung 4 des Aufnahmeraumes 3 angeordnet ist. Der Verbrennungsmotor 14 ist weiterhin mit einer Abgasanlage 17 versehen, wobei der Auslass der Abgasanlage 17 und ein Luftauslass der 18 der Kühlereinrichtung 15 an der Seite der Baueinheit 10 angeordnet ist, die sich bei in dem Aufnahmeraum 3 eingebauter Baueinheit 10 im Bereich der seitlichen Entnahmeöffnung 4 befindet. Die Baueinheit 10 ist weiterhin mit einem Brennstoffspeicher 19 für den Verbrennungsmotor 14 versehen. Der Brennstoffspeicher 19 weist eine Befüllvorrichtung 20 auf, beispielsweise einen Tankstutzen eines als Kraftstofftank ausgebildeten Brennstoffspeichers 19. Die Befüllvorrichtung 20 ist an der Seite der Baueinheit 10 angeordnet, so dass die Befüllvorrichtung 20 bei in dem Aufnahmeraum 3 angeordneter Baueinheit 10 von Außen zugänglich im Bereich der seitlichen Entnahmeöffnung 4 angeordnet ist.

Eine in der autarken Baueinheit 10 integrierte Steuer- und Regelungseinheit 21 steht mit der den Generator 13 und den Verbrennungsmotor 14 umfassenden Stromerzeugungseinrichtung 11 und/oder der Batterie 12 in Wirkverbindung. Über eine Datenkontakteinrichtung 22, beispielsweise ein Bus-System, steht die Steuer- und Regeleinrichtung 21 mit fahrzeugseitigen Bedienelementen und/oder einer fahrzeugsseitigen Steuer- und Regeleinrichtung zum Informations- und Datenaustausch sowie zur Kommunikation mit dem Gabelstapler in Verbindung. Die Batterie 12 der Baueinheit 10 ist mit einer Energiekontakteinrichtung 23, beispielsweise einem üblichen Batteriestecker, versehen, mittels der die Batterie 12 zur Energieübertragung an das fahrzeugseitige elektrische Antriebssystem anschließbar ist.

Die erfindungsgemäße autarke Baueinheit 10 mit der Hybridantriebseinrichtung entspricht in den äußeren Abmessungen und der Energiekontakteinrichtung 23 einer Traktionsbatterie, die in dem Aufnahmeraum 3 angeordnet werden kann. Die autarke Baueinheit 10 umfasst hierbei alle zum Betrieb der Hybridantriebseinrichtung erforderlichen Bauelemente und Einrichtungen. Durch die Anordnung des Lufteinlasses 16, des Luftauslasses 18 und der Abgasanlage 17 im Bereich des Bodens des Aufnahmeraums 3 und/oder im Bereich der seitlichen Entnahmeöffnung 4 des Aufnahmeraums 3 sowie der Anordnung der Befüllvorrichtung 20 im Bereich der seitlichen Entnahmeöffnung 4 des Aufnahmeraums 3 kann die Baueinheit 10 mit der Hybridantriebseinrichtung bei einem Flurförderzeug mit seitlichem Wechsel der Energieversorgungseinrichtung ohne umfangreiche Änderungen am Flurförderzeug als Ersatz und Alternative zu einer Traktionsbatterie verwendet werden.

Durch die erfindungsgemäße autarke Baueinheit 10 kann somit eine einfache und kostengünstige Lösung für einen Hybridantrieb bei einem Flurförderzeugs mit elektrischen Antriebssystem und seitlichem Wechsel der Energieversorgungseinrichtung 2 zur Verfügung gestellt werden.

## Patentansprüche

1. Flurförderzeug, insbesondere Gegengewichtsgabelstapler, mit einem elektrischen Antriebssystem, wobei das Flurförderzeug einen einzigen sich über die gesamte Fahrzeugbreite erstreckenden Aufnahmeraum (3) mit einer einzigen in einem seitlichen Rahmenabschnitt ausgebildeten seitlichen Entnahmeöffnung (4) für eine elektrische Energieversorgungseinrichtung (2) aufweist, **dadurch gekennzeichnet, dass** die Energieversorgungseinrichtung (2) als eine autarke Baueinheit (10) ausgebildet ist, die eine Hybridantriebseinrichtung mit einer Batterie (12) und einer Stromerzeugungseinrichtung (11) umfasst, wobei die Baueinheit (10) durch einen seitlichen Wechsel über die seitliche Entnahmeöffnung (4) in den Aufnahmeraum (3) des Flurförderzeugs (1) einbaubar bzw. aus dem Aufnahmeraum (3) des Flurförderzeugs (1) ausbaubar ist.

2. Flurförderzeug nach Anspruch 1, **dadurch gekennzeichnet, dass** die Stromerzeugungseinrichtung (11) einen von einem Verbrennungsmotor (14) angetriebenen elektrischen Generator (13) umfasst.

3. Flurförderzeug nach Anspruch 1, **dadurch gekennzeichnet, dass** die Stromerzeugungseinrichtung (11) als Brennstoffzelle ausgebildet ist

4. Flurförderzeug nach einem der Ansprüche 1 bis 3, **dadurch gekennzeichnet**, das die Baueinheit (10) eine Kühlereinrichtung (15) umfasst.

5. Flurförderzeug nach einem der Ansprüche 1 bis 4, **dadurch gekennzeichnet, dass** die Baueinheit (10) mit einem Lufteinlass (16) und/oder einem Luftauslass (18) versehen ist, wobei der Lufteinfass (16) und/oder der Luftauslass (18) im Bereich des Bodens des Aufnahmeraums (3) und/oder im Bereich der seitlichen Entnahmeöffnung (4) des Aufnahmeraums (3) angeordnet ist.

6. Flurförderzeug nach einem der Ansprüche 1 bis 5, **dadurch gekennzeichnet, dass** die Baueinheit (10) mit einer Abgasanlage (17) versehen ist, wobei der Auslass der Abgasanlage (17) im Bereich des Bodens des Aufnahmeraums (3) und/oder im Bereich der seitlichen Entnahmeöffnung (4) des Aufnahmeraums (3) angeordnet ist.

7. Flurförderzeug nach einem der Ansprüche 1 bis 6, **dadurch gekennzeichnet, dass** die Baueinheit einen Brennstoffspeicher (19) aufweist.

8. Flurförderzeug nach Anspruch 7, **dadurch gekennzeichnet, dass** der Brennstoffspeicher (19) mit einer Befüllvorrichtung (20) versehen ist, die im Bereich der seitlichen Entnahmeöffnung (4) des Aufnahmeraums (3) angeordnet ist

9. Flurförderzeug nach einem der Ansprüche 1 bis 8, **dadurch gekennzeichnet, dass** die Baueinheit (10) eine Energiekontakteinrichtung (23) aufweist, mittels der die Batterie (12) an das fahrzeugseitige elektrische Antriebssystem anschließbar ist

10. Flurförderzeug nach einem der Ansprüche 1 bis 9, **dadurch gekennzeichnet, dass** die Baueinheit (10) eine Steuer- und Regelungseinheit (21) umfasst

11. Flurförderzeug nach Anspruch 10, **dadurch gekennzeichnet, dass** die Baueinheit (10) eine Datenkontakteinrichtung (22) aufweist; mittels der die Steuer- und Regeleinrichtung (21) an fahrzeugseitige Bedienelemente und/oder eine fahrzeugseitige Steuer- und Regeleinrichtung anschließbar ist.

## Claims

1. Industrial truck, in particular counterweight fork-lift truck, with an electrical drive system, the industrial truck having a single accommodating area (3), which extends over the entire width of the vehicle, with a single lateral removal opening (4), which is formed in a lateral frame section, for an electrical energy supply device (2), **characterized in that** the energy supply device (2) is in the form of an autonomous structural unit (10), which comprises a hybrid drive device with a battery (12) and a current generation device (11), it being possible for the structural unit (10) to be built into the accommodating area (3) of the industrial truck (1) or dismantled from the accommodating area (3) of the industrial truck (1) by means of a lateral change via the lateral removal opening (4).

2. Industrial truck according to Claim 1, **characterized in that** the current generation device (11) comprises an electrical generator (13) driven by an internal combustion engine (14).

3. Industrial truck according to Claim 1, **characterized in that** the current generation device (11) is in the form of a fuel cell.

4. Industrial truck according to one of Claims 1 to 3, **characterized in that** the structural unit (1) comprises a cooler device (15).

5. Industrial truck according to one of Claims 1 to 4, **characterized in that** the structural unit (10) is provided with an air inlet (16) and/or an air outlet (18), the air inlet (16) and/or the air outlet (18) being arranged in the region of the bottom of the accommodating area (3) and/or in the region of the lateral removal opening (4) of the accommodating area (3).

6. Industrial truck according to one of Claims 1 to 5, **characterized in that** the structural unit (10) is provided with an exhaust system (17), the outlet of the exhaust system (17) being arranged in the region of the bottom of the accommodating area (3) and/or in the region of the lateral removal opening (4) of the accommodating area (3).

7. Industrial truck according to one of Claims 1 to 6, **characterized in that** the structural unit has a fuel reservoir (19).

8. Industrial truck according to Claim 7, **characterized in that** the fuel reservoir (19) is provided with a filling apparatus (20), which is arranged in the region of the lateral removal opening (4) of the accommodating area (3).

9. Industrial truck according to one of Claims 1 to 8, **characterized in that** the structural unit (10) has an energy contact device (23), by means of which the battery (12) can be connected to the vehicle-side electrical drive system.

10. Industrial truck according to one of Claims 1 to 9, **characterized in that** the structural unit (10) comprises a control and regulation unit (21).

11. Industrial truck according to Claim 10, **characterized in that** the structural unit (10) has a data contact device (22), by means of which the control and regulation device (21) can be connected to vehicle-side operating elements and/or a vehicle-side control and regulation device.

## Revendications

1. Chariot de manutention, en particulier chariot élévateur à fourche à contrepoids, comprenant un système d'entraînement électrique, le chariot de manutention présentant un espace de réception unique (3) s'étendant sur toute la largeur du véhicule, avec une ouverture de prélèvement latérale unique (4) réalisée dans une portion latérale du châssis, pour un dispositif d'alimentation en puissance électrique (2), **caractérisé en ce que** le dispositif d'alimentation en puissance (2) est réalisé sous forme d'unité constructive autonome (10) qui comprend un dispositif d'entraînement hybride avec une batterie (12) et un dispositif générateur de courant (11), l'unité constructive (10) pouvant être intégrée dans l'espace de réception (3) du chariot de manutention (1) ou pouvant être démontée de l'espace de réception (3) du chariot de manutention (1) par un changement latéral par le biais de l'ouverture de prélèvement latérale (4).

2. Chariot de manutention selon la revendication 1, **caractérisé en ce que** le dispositif générateur de courant (11) comprend un générateur électrique (13) entraîné par un moteur à combustion interne (14).

3. Chariot de manutention selon la revendication 1, **caractérisé en ce que** le dispositif générateur de courant (11) est réalisé sous forme de pile à combustible.

4. chariot de manutention selon l'une quelconque des revendications 1 à 3, **caractérisé en ce que** l'unité constructive (10) comprend un dispositif de refroidissement (15).

5. Chariot de manutention selon l'une quelconque des revendications 1 à 4, **caractérisé en ce que** l'unité constructive (10) est pourvue d'une entrée d'air (16) et/ou d'une sortie d'air (18), l'entrée d'air (16) et/ou la sortie d'air (18) étant disposées dans la région du fond de l'espace de réception (3) et/ou dans la région de l'ouverture de prélèvement latérale (4) de l'espace de réception (3).

6. Chariot de manutention selon l'une quelconque des revendications 1 à 5, **caractérisé en ce que** l'unité constructive (10) est pourvue d'une installation de gaz d'échappement (17), la sortie de l'installation de gaz d'échappement (17) étant disposée dans la région du fond de l'espace de réception (3) et/ou dans la région de l'ouverture de prélèvement latérale (4) de l'espace de réception (3).

7. Chariot de manutention selon l'une quelconque des revendications 1 à 6, **caractérisé en ce que** l'unité constructive présente un réservoir de carburant (19).

8. Chariot de manutention selon la revendication 7, **caractérisé en ce que** le réservoir de carburant (19) est pourvu d'un dispositif de remplissage (20) qui est disposé dans la région de l'ouverture de prélèvement latérale (4) de l'espace de réception (3).

9. Chariot de manutention selon l'une quelconque des revendications 1 à 8, **caractérisé en ce que** l'unité constructive (10) présente un dispositif de contact de puissance (23) au moyen duquel la batterie (12) peut être raccordée au système d'entraînement électrique du côté du véhicule.

10. Chariot de manutention selon l'une quelconque des revendications 1 à 9, **caractérisé en ce que** l'unité constructive (10) comprend une unité de commande et de régulation (21).

11. Chariot de manutention selon la revendication 10, **caractérisé en ce que** l'unité constructive (10) présente un dispositif de contact de données (22) au moyen duquel le dispositif de commande et de régulation (21) peut être raccordé à des éléments de commande du côté du véhicule et/ou à un dispositif de commande et de régulation du côté du véhicule.
